# EUROPEAN PATENT SPECIFICATION

(11) **EP 3 475 165 B1**
(45) Date of publication and mention of the grant of the patent: **04.03.2020**
(21) Application number: 16736400.9
(22) Date of filing: 22.06.2016
(51) Int. Cl.: B63H 23/32

(54) **ARRANGEMENT FOR SUPPORTING A PROPELLER SHAFT OF A MARINE VESSEL AND A METHOD OF SERVICING SUCH**
ANORDNUNG ZUR LAGERUNG EINER ANTRIEBSWELLE EINES WASSERFAHRZEUGS UND VERFAHREN ZUR WARTUNG DAVON
AGENCEMENT POUR LE SUPPORT D'UN ARBRE D'HÉLICE D'UN NAVIRE ET SON PROCÉDÉ D'ENTRETIEN COURANT

(43) Date of publication of application: 01.05.2019
(73) Proprietor: Wärtsilä Ibérica, S.A., 36475 Porriño (ES)
(72) Inventor: LUNDGREN, Henrik, 418 78 Göteborg (SE)
(74) Representative: Genip Oy
(86) International application number: PCT/EP2016/064350
(87) International publication number: WO 2017/220134

(56) References cited:
- WO-A1-2015/178836
- FR-A- 992 713
- GB-A- 1 272 282
- JP-A- S60 189 688
- US-A- 4 795 273

## Description

### Technical field

The present invention relates to an arrangement for supporting a propeller shaft of a marine vessel according to the preamble of independent claim 1 and a to a method of servicing the same. Such an arrangement is for instance known from the document WO 2015/178836 A1. The arrangement and the method of the present invention are mainly aiming at a construction, which allows the servicing, maintenance and condition monitoring primarily from inside the marine vessel.

### Background art

Marine vessels are propelled with the help of one or more propellers located, normally, at the aft of the vessel. The propeller/s and the rudder/s are the only parts of the machinery of the marine vessel extending outside the hull of the vessel. The propeller is connected by means of a propeller shaft to the power source. Normally, a stern tube is used for supporting the shaft. The stern tube is a hollow tube-like structure at the rear end (aft peak) of the marine vessel, through which the propeller shaft passes and connects the power source and the propeller.

The stern tube is situated at the aft peak of the hull of the marine vessel. The forward end of the stern tube is supported by the aft peak bulk head and the aft end of the stern tube gets its support from the stern frame of the marine vessel. The propeller shaft is supported by specifically designed bearings inside the stern tube. Thus the stern tube extends from the nearest bulk head to the stern frame, and the bearings supporting the propeller shaft are arranged such that one is in the nearhood of the bulk head and the other one near the stern frame.

The bearings used for supporting the propeller shaft have traditionally been lubricated with oil resulting in the need for complicated sealing arrangement to ensure that the oil cannot enter either the sea or the interior of the hull, i.e. an oil seal is needed at both ends of the stern tube, and that the water cannot enter the bearings and the interior of the stern tube. The expensive sealing arrangement and environmental awareness have led to the use of water lubricated slide bearings. The first attempts were made with wooden bearings but nowadays either white metal or composite bearings are used. In water lubricated slide bearings water is pumped by means of a specific pumping and filtering device, sometimes called as water treatment device, to a water inlet arranged at the forward end of the stern tube, sometimes in connection with a forward shaft seal located at a side of the first or forward bearing arranged within the stern tube farther away from the propeller, preferably in connection with the bulk head. Thus the water when entering the stern tube also lubricates the forward shaft seal. On its path towards its outlet the water passes through the first or forward bearing and advances between the stern tube and the propeller shaft to the second or aft bearing at the opposite end of the stern tube close to the propeller. After having passed the second or aft bearing the water is allowed to be discharged back to the sea or lake via a water outlet at the end of the stern tube just outside the hull of the marine vessel.

The above discussed water lubricated bearing and stern tube construction is relatively simple, but it has a few drawbacks or weaknesses of which some relate to the overall construction and some to the servicing and maintenance of the bearings and seals.

Firstly, arranging the lubrication of both forward and aft bearings with water results in water flowing inside the stern tube such that surfaces of both the sterntube and the propeller shaft are subject to the corrosive action of the water. The problem has been tried to be solved by manufacturing the components of less corrosive materials and/or by lining the components with, for instance, epoxy. Both actions increase both the material and labour costs in the manufacture of the components.

Secondly, the presence of a stern tube extending between the bulk head and the stern frame requires that the servicing of the stern tube and the bearings thereof has to be performed outside the hull in a dry-dock with the propeller shaft withdrawn from the stern tube.

Thirdly, the stern tube itself is an expensive and heavy component such that both its manufacture, installation and maintenance (mostly due to corrosion) adds to the expenses, both investment and maintenance, of the marine vessel.

An object of the present invention is to offer a solution to at least one of the above mentioned and other problems.

Another object of the present invention is to offer a novel arrangement for supporting the propeller shaft of a marine vessel such that either water or oils, may be used as the lubricant for the propeller shaft aft bearing.

Yet another object of the present invention is to offer a novel arrangement for supporting the propeller shaft of a marine vessel such that the servicing of the aft bearing may be performed from inside the hull of the marine vessel, i.e. in the aft tank of the marine vessel.

A further object of the present invention is to offer a novel arrangement for supporting the propeller shaft of a marine vessel such that the prior art stern tube is not needed at all, whereby the corrosion problems related thereto and to the part of the propeller shaft located normally within the stern tube are avoided as well as the problems related to moving or supporting the heavy stern tube in installation and maintenance operations.

### Disclosure of the Invention

The objects of the invention may be met substantially as is disclosed in the independent claims and in the other claims describing more details of different embodiments of the invention.

According to an embodiment of the present invention it is characteristic for an arrangement for supporting a propeller shaft of a marine vessel having a hull with an aft peak tank limited by a stern frame and a bulk head, the arrangement comprising a propeller shaft carrying a propeller, a water- or oil- lubricated aft bearing arranged within a carrier to a support of the stern frame, and a forward seal, wherein the forward seal is arranged to a forward end of the aft bearing, the aft bearing being a split bearing comprising at least two parts or halves.

According to an embodiment of the present invention it is characteristic for a method of servicing an aft bearing of an arrangement for supporting a propeller shaft of a marine vessel, when the vessel is afloat, the marine vessel having a hull with an aft peak tank limited by a stern frame and a bulk head, the arrangement for supporting the propeller shaft comprising a propeller shaft carrying a propeller, a water- or oil-lubricated aft bearing arranged within a carrier to a support of the stern frame, a forward seal, means for pumping and filtering lubricant, and a lubricant feed line leading from the means for pumping and filtering lubricant to the forward seal that the method comprises the steps of:
a) from outside the hull of the marine vessel
   i. coupling one of the propeller shaft and the propeller to a crane,
b) from inside the hull of the marine vessel,
   i. loosening the forward seal from a forward end of the carrier, and decoupling the lubricant feed line from one of the carrier, a water inlet member and the forward seal,
   ii. pulling at least one upper part of the shaft bearing in forward direction from within the carrier,
   iii. lifting the propeller shaft by means of the crane,
   iv. pulling at least one lower part of the aft bearing in forward direction from within the carrier,
   v. replacing the parts of the aft bearing with new ones,
   vi. pushing at least one lower part of the new aft bearing in aft direction within the carrier,
   vii. lowering the propeller shaft by means of the crane to a support of the at least one lower part of the shaft bearing,
   viii. pushing at least one upper part of the new shaft bearing in aft direction within the carrier,
   ix. attaching the forward seal to the forward end of the carrier, and coupling the lubricant feed line to one of the carrier, a water inlet member and the forward seal, and
c) from outside the hull of the marine vessel i. loosening one of the propeller shaft and the propeller from the crane.

The exemplary embodiments of the invention presented in this patent application are not to be interpreted to pose limitations to the applicability of the appended claims. The verb "to comprise" is used in this patent application as an open limitation that does not exclude the existence of also non-recited features. The features recited in depending claims are mutually freely combinable unless otherwise explicitly stated. The novel features which are considered as characteristic of the invention are set forth in particular in the appended claims.

The present invention, by solving at least one of the above listed problems, brings about at least some of the following advantages:
- Compatible with upcoming environmental requirements i.e. use of mineral oil for lubricating purposes should be avoided.
- Enhanced endurance and serviceability to maximize uptime for the customer.
- Simple system to promote low cost to gain an additional competitive edge.
- No stern tube is needed
   - Low cost,
   - Simple installation,
   - Less risk for corrosion,
   - Logistic advantage,
- Fully afloat serviceable system, reduced maintenance cost,
- System suitable for simple condition monitoring, all sensors accessible and changeable without the need for using a diver,
- Conventional shaft with limited need for lining, low cost
- The oil capacity is remarkably reduced as the design of the invention has, in practice, no stern tube
- Due to the reduced oil capacity the costs related to the use of environmentally acceptable lubricant (so called EAL), i.e. bio-oil based, or synthetic, but biodegradable oils is significantly decreased

### Brief Description of Drawings

In the following, the arrangement for supporting the propeller shaft of a marine vessel of the present invention and the method of servicing such will be discussed in more detail with reference to the accompanying exemplary, schematic drawings, in which
Figure 1 illustrates a prior art arrangement for supporting the propeller shaft of a marine vessel,
Figure 2 illustrates an arrangement for supporting the propeller shaft of a marine vessel in accordance with a first preferred embodiment of the present invention,
Figures 3 - 5 illustrate the arrangement of Figure 2 in its various servicing or maintenance phases, and
Figure 6 illustrates an arrangement for supporting the propeller shaft of a marine vessel in accordance with a second preferred embodiment of the present invention.

### Detailed Description of Drawings

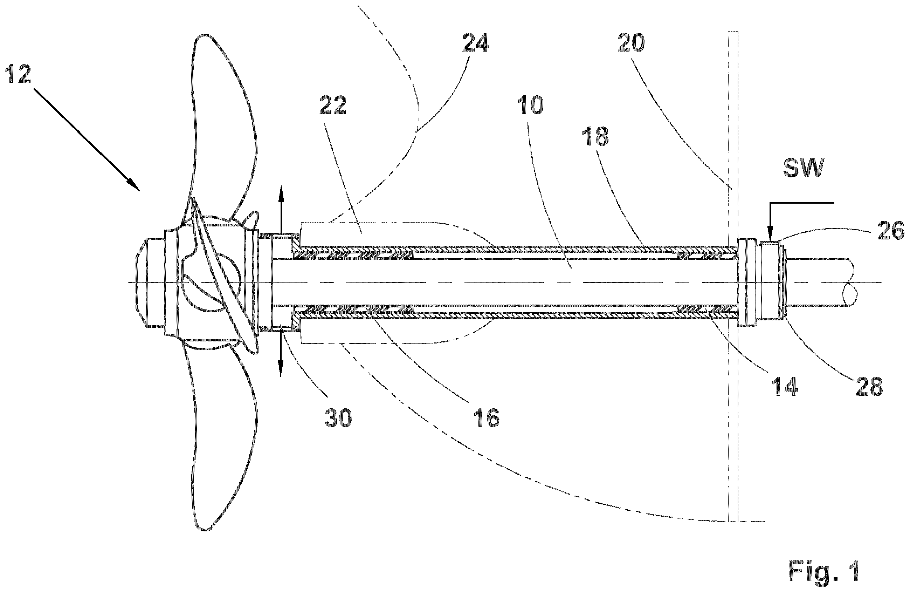

Figure 1 depicts schematically a prior art arrangement for supporting the propeller shaft of a marine vessel. The propeller shaft 10 having a propeller 12 attached to the aft end thereof is supported by means of a forward bearing 14 and an aft bearing 16 to the stern tube 18. The stern tube 18 is fastened at its forward end to a bulk head 20 and at its aft end to a bracket 22 attached to the stern frame 24. At its forward end the stern tube 18 is provided with an inlet 26 for the water SW, and a forward seal 28 that prevents the water from entering the interior of the hull. The forward seal 28 is arranged in a compartment within the vessel hull different from the one the stern tube 18 is located. The water that has been pumped via the inlet 26 to the forward water lubricated bearing 14 passes the forward bearing 14 and flows between the stern tube 18 and the propeller shaft 10 to the aft water lubricated bearing 16, passes the bearing 16 and is discharged back to the sea via outlet opening/s 30 at the aft end of the stern tube 18 in connection with the aft bearing of the propeller shaft 10 between the stern tube 18 and the propeller 12.

As was already briefly discussed above the construction is relatively simple, but the servicing, for instance, of the aft bearing 16 has to be performed from outside the hull with the propeller shaft withdrawn, i.e. in a dry-dock.

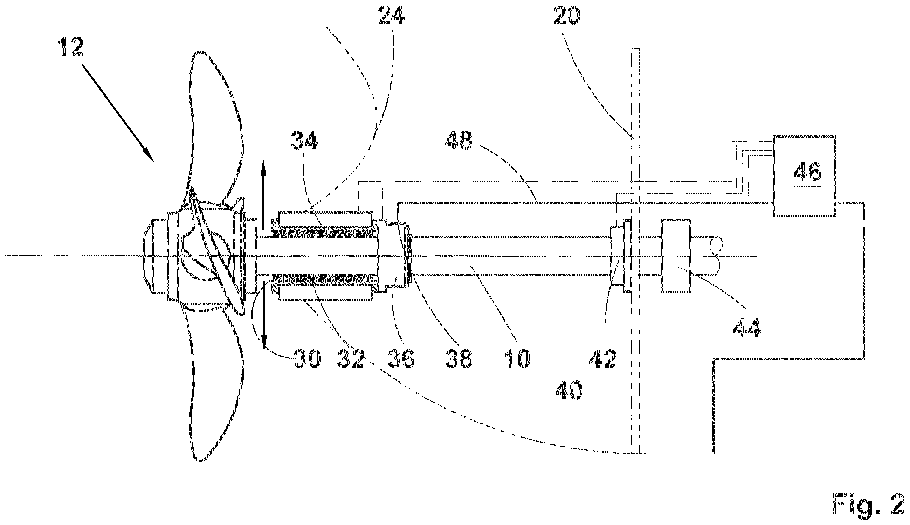

Figure 2 illustrates an arrangement for supporting the propeller shaft of a marine vessel in accordance with a first preferred embodiment of the present invention. Here, the components, i.e. the propeller shaft 10 and the propeller 12 as well as the bulk head 20, the stern frame 24 and the lubrication water outlet opening/s 30 in connection with the aft bearing of the propeller shaft, that have remained the same are referred to by using the same reference numerals as in Figure 1. The main difference of the present invention when compared to the prior art support arrangement is the lack of the entire stern tube. The support arrangement comprises now a water lubricated aft bearing 32 arranged within a carrier 34 (preferably but not necessarily a bronze sleeve), which is attached to the stern frame 24, preferably but not necessarily, by means of a resin mount. Next, in the forward direction, on the propeller shaft 10 is a forward seal 36 fastened to the forward end of the carrier 34. The forward seal 36 may also be coupled with water/lubricant inlet 38 so that the water may be directly introduced from its inlet 38 to lubricate both the aft bearing 32 and the forward seal 36. However, the water/lubricant inlet 38 may, optionally, be arranged in connection with the carrier 34 or in a water inlet member of its own, like for instance in an intermediate flange between the forward seal 36 and the carrier 34. By means of the forward seal 36 the entrance of water to the aft peak tank 40 is eliminated. The passage of the propeller shaft 10 through the bulk head 20 is sealed by means of a bulk head seal 42. As normally the tanks or compartments on both sides of the bulk head 20 are empty, the bulk head seal 42 is, in practice, idling. The actual supporting of the propeller shaft 10 farther away from the propeller 12 and the aft bearing 32 is performed by an intermediate bearing 44, which is, preferably but not necessarily an oil lubricated radial bearing. The intermediate bearing 44 may be arranged in connection with the bulk head 20 or on some other support structure on either side of the bulk head 20.

Figure 2 also shows a combined water, or more generally, lubricant treatment/condition monitoring means 46, which, on the one hand, takes water and treats, for instance filters, it in condition for using as a lubricant prior to pumping such along a water or lubricant feed line 48 to the water/lubricant inlet 38 of the aft bearing 32 or that of the forward seal 36, and, on the other hand, monitors the condition of the aft bearing 32, the forward seal 36, the bulk head or bulk head seal 42 and the radial intermediate bearing 44. From now on such means are called as means 46 for pumping and filtering lubricant.

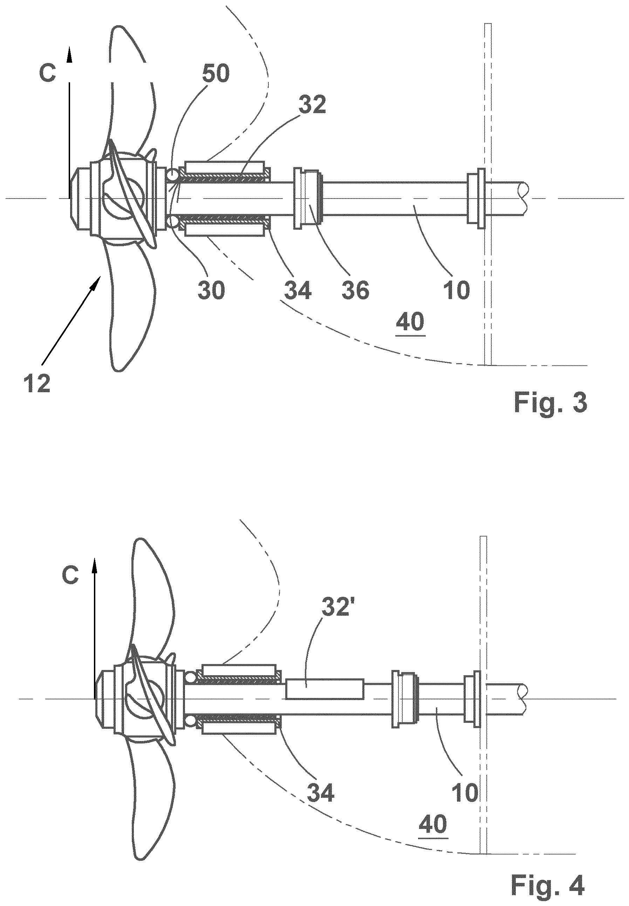

Figure 3 illustrates a situation where a need to replace the aft bearing 32 has occurred. The replacement operation is initiated by sending diver/s to mount and engage an inflatable or other appropriate sealing means 50 to close the sealing/lubrication water outlet opening/s 30, and to couple a crane, shown by arrow C, to the end of the propeller shaft 10 or the propeller 12 to support the weight of the propeller 12 and the propeller shaft 10, while the aft bearing 32 is serviced. The next step is performed in the aft peak tank 40 by loosening the lubricant feed line 48 from the water/lubricant inlet 38 and the forward seal 36 from the forward end of the carrier 34 and moving it away from the carrier 34 and the aft bearing 32.

Figure 4 illustrates a phase in the aft bearing 32 replacement where, now that the aft bearing used is a split bearing, the upper half 32' or the upper parts of the aft bearing is/are pulled or extracted away from within the carrier 34 in forward direction to the inside of the aft peak tank 40 and removed.

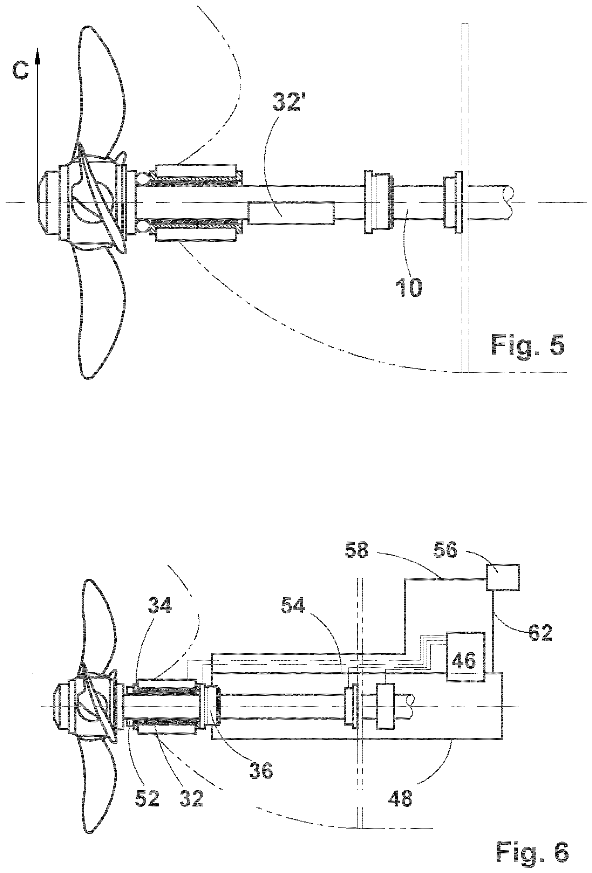

Figure 5 illustrates a phase in the aft bearing replacement where the crane C is used to lift the propeller and the propeller shaft 10 from the support of the lower half 32" of the aft bearing, as there is room for slight lifting, or removing the weight, of the shaft 10 now that the upper half or upper parts of the aft bearing is/are removed. Thereafter the lower half 32" or lower parts of the aft bearing is/are pulled or extracted away from within the carrier 34 in forward direction to the inside of the aft peak tank 40 and removed.

The replacement of the removed parts with new ones takes place such that the new lower half or lower parts of the shaft bearing is/are pushed in aft direction within the carrier, whereafter the propeller shaft is lowered by means of the crane to the support of the lower half or lower parts of the aft bearing. Next, the new upper half or upper parts of the aft bearing is/are pushed in aft direction within the carrier, the lubricant feed line is coupled to the water/lubricant inlet, and the forward seal is fastened to the forward end of the carrier. Thereafter, the divers/s may, from outside the hull of the marine vessel loosen either the propeller shaft or the propeller from the crane, and disengage and remove the inflatable seal 50.

Figure 6 illustrates an arrangement for supporting the propeller shaft of a marine vessel in accordance with a second preferred embodiment of the present invention. Here, a closed arrangement used in connection with water- or oil- lubricated aft bearing is discussed. The arrangement differs from the open water- lubricated arrangement in that an aft seal 52 is arranged to the aft end of the aft bearing 32, preferably the aft seal 52 is fastened to the aft end of the carrier 34. The aft seal 52 prevents the lubricant from leaking out in the surrounding water from the aft bearing 34, whereby a circulation for the lubricant has to be provided. For arranging the lubricant circulation an outlet for the lubricant is arranged in one of the carrier 34, a specific water inlet/outlet member and the forward seal 36. In other words, the means 46 for pumping and filtering lubricant is connected by means of a lubricant feed line 48 and lubricant return line 54 to one of the carrier 34, a specific water inlet/outlet member and the forward seal 36. Additionally, for ensuring the lubrication of the aft bearing 32 a gravity tank 56 for lubricant is arranged at a higher level than the aft bearing 32 and the means 46 for pumping and filtering lubricant so that at least one of the forward seal 36, lubricant inlet and the means 46 for pumping and filtering lubricant is connected either directly or indirectly by lines 58 and 62 to the gravity tank 56.

The embodiment of Figure 6 simplifies the service or replacement of the split aft bearing 32 such that, due to the presence of the aft seal 52, there is no need for using an inflatable and mountable seal of the embodiment of Figures 2 - 5, but the only measure the divers need to perform is to couple the crane to the propeller shaft or the propeller.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention as defined in the appended claims. The details mentioned in connection with any embodiment above may be used in connection with another embodiment when such combination is technically feasible.

## Claims

1. An arrangement for supporting a propeller shaft of a marine vessel having a hull with an aft peak tank (40) limited by a stern frame (24) and a bulk head (20), the arrangement comprising a propeller shaft (10) carrying a propeller (12), a water- or oil-lubricated aft bearing (16; 32) arranged within a carrier (34) and to a support of the stern frame (24), and a forward seal, **characterized in that** the forward seal (36) is arranged to a forward end of the aft bearing (32), the aft bearing (32) being a split bearing comprising at least two parts or halves (32' and 32").

2. The arrangement as recited in claim 1, **characterized in that** a lubricant inlet (38) for providing the aft bearing (32) and the shaft seal (36) with lubricant is arranged in connection with one of the carrier (34), a water inlet/outlet member and the forward seal (36).

3. The arrangement as recited in any one of the preceding claims, **characterized in that** the aft bearing (32) is located within an aft peak tank (40) in a hull of the marine vessel, and that the parts (32', 32") of the aft bearing (32) are removable in a forward direction to the inside of the aft peak tank (40).

4. The arrangement as recited in claim 2, **characterized in that** the lubricant inlet (38) is connected by a lubricant feed line (48) to means (46) for pumping and filtering lubricant.

5. The arrangement as recited in claim 4, **characterized in** an aft seal (52) arranged at the aft end of the aft bearing (32).

6. The arrangement as recited in claim 5, **characterized in** a lubricant return line (54) arranged between one of the carrier (34), a water inlet/outlet member and the forward seal (36) and the means (46) for pumping and filtering lubricant.

7. The arrangement as recited in claim 5, **characterized in** a gravity tank (56) for the lubricant arranged on a higher level than the means (46) for pumping and filtering lubricant.

8. The arrangement as recited in any one of the preceding claims, **characterized in** a further shaft seal, i.e. a bulk head seal (42) arranged in connection with a bulk head (20).

9. A method of servicing an arrangement for supporting a propeller shaft of a marine vessel, when the vessel is afloat, the marine vessel having a hull with an aft peak tank (40) limited by a stern frame (24) and a bulk head (20), the arrangement for supporting the propeller shaft comprising a propeller shaft (10) carrying a propeller (12), a water or oil- lubricated aft bearing (32) arranged within a carrier (34) to a support of the stern frame (24), a forward seal (36), means (46) for pumping and filtering lubricant, and a lubricant feed line (48) leading from the means (46) for pumping and filtering lubricant to the forward seal (36), the method comprising the steps of:
a) from outside the hull of the marine vessel
i. coupling one of the propeller shaft (10) and the propeller (12) to a crane (C),
b) from inside the hull of the marine vessel,
i. loosening the forward seal (36) from a forward end of the carrier (34), and decoupling the lubricant feed line (48) from one of the carrier (34), an inlet member and the forward seal (36),
ii. pulling at least one upper part (32') of the shaft bearing (32) in forward direction from within the carrier (34),
iii. lifting the propeller shaft (10) by means of the crane (C),
iv. pulling at least one lower part (32") of the aft bearing (32) in forward direction from within the carrier (34),
v. replacing the parts of the aft bearing with new ones,
vi. pushing at least one lower part (32") of the new aft bearing (32) in aft direction within the carrier (34),
vii. lowering the propeller shaft (10) by means of the crane (C) to a support of the at least one lower part (32") of the shaft bearing (32),
viii. pushing at least one upper part (32') of the new shaft bearing (32) in aft direction within the carrier (34),
ix. attaching the forward seal (36) to the forward end of the carrier (34), and coupling the lubricant feed line (48) to one of the carrier (34), a water inlet member and the forward seal (36), and
c) from outside the hull of the marine vessel
i. loosening one of the propeller shaft (10) and the propeller (12) from the crane (C).

10. The method as recited in claim 9, wherein the arrangement for supporting the propeller shaft further comprises a lubricant return line (54) and an aft seal (52), the method being **characterized by**, in step b) i. decoupling the lubricant return line (54) from one of the carrier (34), a water inlet/outlet member and the forward seal (36), and in step b) ix. coupling the lubricant return line (54) to one of the carrier (34), a water inlet/outlet member and the forward seal (36).

11. The method as recited in claim 9, wherein the arrangement for supporting the propeller shaft further comprises lubricant outlet opening/s (30) for discharging lubricant from the aft bearing (32), the method being **characterized by**, in step a), mounting and engaging an inflatable seal round the propeller shaft (10) to close the lubricant outlet opening/s (30) and, in step c), disengaging and dismounting the inflatable seal (50) to open the lubricant outlet opening/s (30).

12. The method as recited in claim 9, **characterized by** using, in step b) ix. a new forward seal (36).

## Patentansprüche

1. Anordnung zum Stützen einer Schraubenwelle eines Seeschiffs, das einen Rumpf mit einem Achterpiektank (40), der durch einen Achtersteven (24) und ein Schott (20) begrenzt wird, aufweist, wobei die Anordnung eine Schraubenwelle (10), die eine Schraube (12) trägt, ein wasser- oder ölgeschmiertes hinteres Lager (16; 32), das innerhalb einer Halterung (34) und an einer Stütze des Achterstevens (24) angeordnet ist, und eine vordere Dichtung umfasst, **dadurch gekennzeichnet, dass** die vordere Dichtung (36) an einem vorderen Ende des hinteren Lagers (32) angeordnet ist, wobei das hintere Lager (32) ein geteiltes Lager ist, das wenigstens zwei Teile oder Hälften (32' und 32") umfasst.

2. Anordnung nach Anspruch 1, **dadurch gekennzeichnet, dass** ein Schmiermitteleinlass (38) zum Versorgen des hinteren Lagers (32) und der Wellendichtung (36) mit Schmiermittel in Verbindung mit einem von der Halterung (34), einem Wassereinlass-/-auslasselement und der vorderen Dichtung (36) angeordnet ist.

3. Anordnung nach einem vor vorhergehenden Ansprüche, **dadurch gekennzeichnet, dass** das hintere Lager (32) innerhalb eines Achterpiektanks (40) in einem Rumpf des Seeschiffs angeordnet ist und dass die Teile (32', 32") des hinteren Lagers (32) in einer Vorwärtsrichtung zu der Innenseite des Achterpiektanks (40) entfernt werden können.

4. Anordnung nach Anspruch 2, **dadurch gekennzeichnet, dass** der Schmiermitteleinlass (38) durch eine Schmiermittel-Speiseleitung (48) mit Mitteln (46) zum Pumpen und Filtern von Schmiermittel verbunden ist.

5. Anordnung nach Anspruch 4, **gekennzeichnet durch** eine hintere Dichtung (52), die an dem hinteren Ende des hinteren Lagers (32) angeordnet ist.

6. Anordnung nach Anspruch 5, **gekennzeichnet durch** eine Schmiermittel-Rückführungsleitung (54), die zwischen einem von der Halterung (34), einem Wassereinlass-/-auslasselement und der vorderen Dichtung (36) und den Mitteln (46) zum Pumpen und Filtern von Schmiermittel angeordnet ist.

7. Anordnung nach Anspruch 5, **gekennzeichnet durch** einen Falltank (56) für das Schmiermittel, der auf einer höheren Ebene als die Mittel (46) zum Pumpen und Filtern von Schmiermittel angeordnet ist.

8. Anordnung nach einem der vorhergehenden Ansprüche, **gekennzeichnet durch** eine weitere Wellendichtung, z. B. eine Schottdichtung (42), die in Verbindung mit einem Schott (20) angeordnet ist.

9. Verfahren zum Warten einer Anordnung zum Stützen einer Schraubenwelle eines Seeschiffs, wenn das Schiff schwimmt, wobei das Seeschiff einen Rumpf mit einem Achterpiektank (40), der durch einen Achtersteven (24) und ein Schott (20) begrenzt wird, aufweist, wobei die Anordnung zum Stützen der Schraubenwelle eine Schraubenwelle (10), die eine Schraube (12) trägt, ein wasser- oder ölgeschmiertes hinteres Lager (32), das innerhalb einer Halterung (34) an einer Stütze des Achterstevens (24) angeordnet ist, eine vordere Dichtung (36), Mittel (46) zum Pumpen und Filtern von Schmiermittel und eine Schmiermittel-Speiseleitung (48), die von den Mitteln (46) zum Pumpen und Filtern von Schmiermittel zu der vorderen Dichtung (36) führt, umfasst, wobei das Verfahren die folgenden Schritte umfasst:
a) von außerhalb des Rumpfs des Seeschiffs
i. Verbinden eines von der Schraubenwelle (10) und der Schraube (12) mit einem Kran (C),
b) von innerhalb des Rumpfs des Seeschiffs
i. Lösen der vorderen Dichtung (36) von einem vorderen Ende der Halterung (34) und Trennen der Schmiermittel-Speiseleitung (48) von einem von der der Halterung (34), einem Einlasselement und der vorderen Dichtung (36),
ii. Ziehen wenigstens eines oberen Teils (32') des Wellenlagers (32) in einer Vorwärtsrichtung von innerhalb der Halterung (34),
iii. Anheben der Schraubenwelle (10) mit Hilfe eines Krans (C),
iv. Ziehen wenigstens eines unteren Teils (32'') des Wellenlagers (32) in einer Vorwärtsrichtung von innerhalb der Halterung (34),
v. Ersetzen der Teile des hinteren Lagers durch neue,
vi. Schieben wenigstens eines unteren Teils (32'') des neuen Wellenlagers (32) in einer Rückwärtsrichtung innerhalb der Halterung (34),
vii. Absenken der Schraubenwelle (10) mit Hilfe des Krans (C) auf eine Stütze des wenigstens einen unteren Teils (32") des Wellenlagers (32),
viii. Schieben wenigstens eines oberen Teils (32') des neuen Wellenlagers (32) in einer Rückwärtsrichtung innerhalb der Halterung (34),
ix. Befestigen der vorderen Dichtung (36) an dem vorderen Ende der Halterung (34) und Verbinden der Schmiermittel-Speiseleitung (48) mit einem von der Halterung (34), einem Wassereinlasselement und der vorderen Dichtung (36),
c) von außerhalb des Rumpfs des Seeschiffs
i. Lösen eines von der Schraubenwelle (10) und der Schraube (12) von dem Kran (C).

10. Verfahren nach Anspruch 9, wobei die Anordnung zum Stützen der Schraubenwelle ferner eine Schmiermittel-Rückführungsleitung (54) und eine hintere Dichtung (52) umfasst, wobei das Verfahren **gekennzeichnet ist durch**, in Schritt b) i., Trennen der Schmiermittel-Speiseleitung (54) von einem von der Halterung (34), einem Wassereinlass-/-auslasselement und der vorderen Dichtung (36) und, in Schritt b) ix., Verbinden der Schmiermittel-Speiseleitung (54) mit einem von der Halterung (34), einem Wassereinlass-/-auslasselement und der vorderen Dichtung (36).

11. Verfahren nach Anspruch 9, wobei die Anordnung zum Stützen der Schraubenwelle ferner Schmiermittel-Auslassöffnungen (30) zum Abgeben von Schmiermittel aus dem hinteren Lager (32) umfasst, wobei das Verfahren **gekennzeichnet ist durch**, in Schritt a), Anbringen und In-Eingriff-Bringen einer aufblasbaren Dichtung um die Schraubenwelle (10), um die Schmiermittel-Auslassöffnungen (30) zu schließen, und, in Schritt c), Ausrücken und Abbauen der aufblasbaren Dichtung (50), um die Schmiermittel-Auslassöffnungen (30) zu öffnen.

12. Verfahren nach Anspruch 9, **gekennzeichnet durch** das Verwenden, in Schritt b) ix., einer neuen vorderen Dichtung (36).

## Revendications

1. Dispositif destiné à supporter un arbre d'hélice d'un navire présentant une coque avec un réservoir de coqueron arrière (40) limité par un châssis de poupe (24) et une paroi de séparation (20), le dispositif comprenant un arbre d'hélice (10) portant une hélice (12), un roulement arrière lubrifié à l'eau ou à l'huile (16 ; 32) disposé à l'intérieur d'un moyen de transport (34) et sur un support du châssis de poupe (24), et un joint avant, **caractérisé en ce que** le joint avant (36) est disposé à une extrémité avant du roulement arrière (32), le roulement arrière (32) étant un palier divisé comprenant au moins deux parties ou moitiés (32' et 32") .

2. Dispositif selon la revendication 1, **caractérisé en ce qu'**une entrée de lubrifiant (38) destinée à alimenter le roulement arrière (32) et le joint d'arbre (36) en lubrifiant est disposée en connexion avec l'un parmi le moyen de transport (34), un élément d'entrée/de sortie d'eau et le joint avant (36).

3. Dispositif selon l'une quelconque des revendications précédentes, **caractérisé en ce que** le roulement arrière (32) se trouve dans un réservoir de coqueron arrière (40) dans une coque du navire, et **en ce que** les parties (32', 32") du roulement arrière (32) sont détachables dans une direction avant vers l'intérieur du réservoir de coqueron arrière (40).

4. Dispositif selon la revendication 2, **caractérisé en ce que** l'entrée de lubrifiant (38) est reliée à un moyen de pompage et de filtration de lubrifiant (46) par le biais d'une conduite d'alimentation en lubrifiant (48).

5. Dispositif selon la revendication 4, **caractérisé en ce qu'**un joint arrière (52) est disposé à une extrémité arrière du roulement arrière (32).

6. Dispositif selon la revendication 5, **caractérisé en ce qu'**une conduite de retour de lubrifiant (54) est disposée entre l'un parmi le moyen de transport (34), un élément d'entrée/de sortie d'eau et le joint avant (36) d'une part et le moyen de pompage et de filtration de lubrifiant (46).

7. Dispositif selon la revendication 5, **caractérisé en ce qu'**un réservoir à gravité (56) pour le lubrifiant est disposé à un niveau plus élevé que le moyen de pompage et de filtration de lubrifiant (46).

8. Dispositif selon l'une quelconque des revendications précédentes, **caractérisé en ce qu'**un joint d'arbre supplémentaire, c'est-à-dire un joint de paroi de séparation (42), est disposé en connexion avec une paroi de séparation (20).

9. Procédé de maintenance d'un dispositif destiné à supporter un arbre d'hélice d'un navire, lorsque le navire est à flot, le navire présentant une coque avec un réservoir de coqueron arrière (40) limité par un châssis de poupe (24) et une paroi de séparation (20), le dispositif destiné à supporter l'arbre d'hélice comprenant un arbre d'hélice (10) portant une hélice (12), un roulement arrière lubrifié à l'eau ou à l'huile (32) disposé à l'intérieur d'un moyen de transport (34) sur un support du châssis de poupe (24), et un joint avant (36), un moyen de pompage et de filtration de lubrifiant (46) destiné à pomper et à filtrer du lubrifiant, et une conduite d'alimentation en lubrifiant (48) menant du moyen de pompage et de filtration de lubrifiant (46) au joint avant (36), le procédé comprenant les étapes suivantes :
a) depuis l'extérieur de la coque du navire
i. accouplement de l'un parmi l'arbre d'hélice (10) et l'hélice (12) à une grue (C),
b) depuis l'intérieur de la coque du navire,
i. détachement du joint avant (36) depuis une extrémité avant du moyen de transport (34), et désaccouplement de la conduite d'alimentation en lubrifiant (48) d'avec l'un parmi le moyen de transport (34), un élément d'entrée et le joint avant (36),
ii. traction d'au moins une partie supérieure (32') du roulement d'arbre (32) dans une direction avant depuis l'intérieur du moyen de transport (34),
iii. soulèvement de l'arbre d'hélice (10) à l'aide de la grue (C),
iv. traction d'au moins une partie inférieure (32") du roulement arrière (32) dans une direction avant depuis l'intérieur du moyen de transport (34),
v. remplacement des parties du roulement arrière par de nouvelles,
vi. poussée d'au moins une partie inférieure (32") du nouveau roulement arrière (32) dans une direction arrière vers l'intérieur du moyen de transport (34),
vii. abaissement de l'arbre d'hélice (10) à l'aide de la grue (C) sur un support de l'au moins une partie inférieure (32") du roulement d'arbre (32),
viii. poussée d'au moins une partie supérieure (32') du nouveau roulement d'arbre (32) dans une direction arrière vers l'intérieur du moyen de transport (34),
ix. fixation du joint avant (36) à l'extrémité avant du moyen de transport (34), et accouplement de la conduite d'alimentation en lubrifiant (48) à l'un parmi le moyen de transport (34), un élément d'entrée d'eau et le joint avant (36), et
c) depuis l'extérieur de la coque du navire
i. détachement de l'un parmi l'arbre d'hélice (10) et l'hélice (12) par rapport à la grue (C).

10. Procédé selon la revendication 9, dans lequel le dispositif destiné à supporter l'arbre d'hélice comprend en outre une conduite de retour de lubrifiant (54) et un joint arrière (52), le procédé étant **caractérisé par**, à l'étape b) i. le désaccouplement de la conduite de retour de lubrifiant (54) d'avec l'un parmi le moyen de transport (34), un élément d'entrée/de sortie d'eau et le joint avant (36), et à l'étape b) ix. l'accouplement de la conduite de retour de lubrifiant (54) à l'un parmi le moyen de transport (34), un élément d'entrée/de sortie d'eau et le joint avant (36) .

11. Procédé selon la revendication 9, dans lequel le dispositif destiné à supporter l'arbre d'hélice comprend en outre un/des orifice(s) de sortie de lubrifiant (30) permettant de décharger du lubrifiant à partir du roulement arrière (32), le procédé étant **caractérisé par**, à l'étape a), le montage et l'engagement d'un joint gonflable autour de l'arbre d'hélice (10) pour fermer l'orifice/les orifices de sortie de lubrifiant (30) et, à l'étape c), le désengagement et le démontage du joint gonflable (50) pour ouvrir l'orifice/les orifices de sortie de lubrifiant (30).

12. Procédé selon la revendication 9, **caractérisé par** l'utilisation d'un nouveau joint avant (36) à l'étape b) ix.
